# EUROPÄISCHE PATENTSCHRIFT

(11) **EP 2 196 095 B1**
(45) Veröffentlichungstag und Bekanntmachung des Hinweises auf die Patenterteilung: **19.02.2014**
(21) Anmeldenummer: 09013984.1
(22) Anmeldetag: 07.11.2009
(51) Int. Cl.: A23G 9/28, A23G 9/48, A23G 9/22, A23G 9/50

(54) **Vorrichtung für Frischeis**
Device for fresh ice
Dispositif pour de la glace fraîche

(30) Priorität: 11.12.2008 DE 102008061809
(43) Veröffentlichungstag der Anmeldung: 16.06.2010
(73) Patentinhaber: Petersen, Siegfried, 24857 Borgwedel (DE)
(72) Erfinder: Petersen, Siegfried, 24857 Borgwedel (DE)
(74) Vertreter: Hansmann, Dierk

(56) Entgegenhaltungen:
- GB-A- 136 017
- GB-A- 216 240
- GB-A- 329 221
- GB-A- 674 789
- GB-A- 697 500
- GB-A- 190 109 799
- US-A- 1 636 142
- US-A- 1 899 511

## Beschreibung

Die Erfindung bezieht sich auf eine Vorrichtung für Frischeis zur Aufbereitung verkaufsfertiger, individuell zusammenstellbarer Portionen als Sandwicheis mit beidseitiger Außenbegrenzung durch Zuordnung von Waffeln oder dergleichen und zwischengelagerter Eismasse, wobei eine Form mit einem Grundelement und einem Rahmen als Außenbegrenzung in Viereckform für eine einzubringende Eismasse gebildet ist und eine verstellbare Bodenplatte an der Form schwenkbar gelagert ist, die ein abgewinkeltes verbundenes Wandelement als Teil des Rahmens besitzt und die Form ein Halteelement als Handgriff senkrecht zum Grundelement aufweist.

Es sind zur Herstellung von Sandwicheis nur bedingt Hilfsmittel bekannt, um eine individuelle Herstellung und einen laufenden Abverkauf auf einfache Weise durchzuführen.

Zur Herstellung von einem Sandwicheis ist eine gattungsgemässe Anordnung nach der GB 329 221 A bekannt geworden. Hierbei ist es für einen professionellen Einsatz und Abverkauf nachteilig, eine Handhabung durch eine erforderliche Druckbewegung über einen Finger zum Herausschwenken der Bodenplatte mit der aufgenommenen Eismasse zu bewirken. Ferner wird durch die plane Aufnahmefläche der Bodenplatte und der sich bildenden Flüssigkeit ein Klebeeffekt einer eingelegten Waffel erzeugt.

Ferner ist aus der GB 09799 A eine Form zum Einfüllen einer Eismasse bekannt geworden, wobei die Eismasse durch eine zwischengeschaltete Grundplatte mit einer Handhabe aus der Form senkrecht herausschiebbar ist. Eine ähnliche Anordnung ist aus der GB 697 500 bekannt geworden, wobei eine über eine verstellbare Grundplatte in einer Form durch mechanische Hilfsmittel aus einer Füllposition durch eine Vertikalverstellung in eine Entnahmeposition einstellbar ist.

Die Aufgabe der Erfindung ist es, eine Anordnung für ein individuell hergestelltes Sandwicheis zu schaffen, die eine funktionelle Handhabung für die Herstellung sowie eine sichere Entnahme für den Eisverkauf gewährleistet und eine gute und sichere Handhabung ermöglicht.

Die Lösung dieser Aufgabe erfolgt erfindungsgemäß dadurch, daß die Bodenplatte zur Aufnahme einer eingelegten Waffel oder dergleichen mit ihrem Wandelement über eine am Wandelement angeordnete Handhabe durch eine über eine Schwenkachse im Endbereich des Grundelementes hinausreichende Lasche gebildet ist und die Bodenplatte aus einer unteren Füllposition in eine Entnahmeposition mit einer aufgelegten Waffel oder dergleichen als Abdeckung gegenüber dem Rahmen über die Schwenkachse einstellbar ist sowie der Haltegriff und die Handhabe im Abstand zur gemeinsamen Erfassung als Ein-Hand-Bedienung angeordnet sind, wobei die verschwenkbare Bodenplatte wellenförmig und mit Durchtrittsöffnungen ausgebildet ist.

Hierdurch wird eine Handhabung ermöglicht, die für eine laufende Herstellung und Abverkauf geeignet und einfach zu handhaben ist. Dabei ist auch eine laufende Reinigung nach den Hygieneanforderungen möglich.

Zur Erleichterung einer Entnahme des hergestellten Produktes ist vorgesehen, daß die verschwenkbare Bodenplatte mit dem Wandelement an einen der Schwenkachse abseitigem Ende einen Griffausschnitt aufweist.

Um einen Reinigungsvorgang zu erleichtern, wird vorgeschlagen, daß der Haltegriff über einen Bajonettverschluß mit dem Grundelement lösbar verriegelbar angeordnet ist.

Zur individuellen Ausbildung wird vorgeschlagen, daß der Rahmen als Außenbegrenzung mindestens an einem der Schwenkachse der Bodenplatte abseitigen Bereich eine Rundung aufweist.

Ferner ist vorgesehen, daß die Höhe des Rahmens als Außenbegrenzung entsprechend der Dicke des Sandwiches bemessen ist.

In der Zeichnung ist ein Ausführungsbeispiel der Erfindung schematisch dargestellt. Es zeigen:

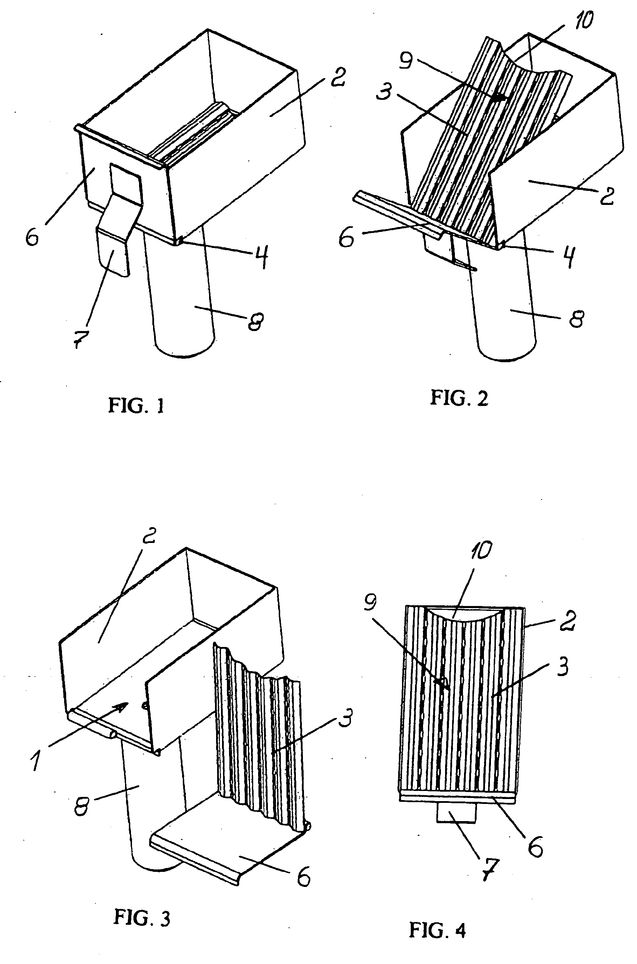

- Fig. 1: eine perspektivische Ansicht der Vorrichtung in einer Füllposition;
- Fig. 2: eine Ansicht wie Fig. 1 in einer Entnahmeposition;
- Fig. 3: eine Vorrichtung mit einer über die Schwenkachse getrennten Bodenplatte und
- Fig. 4: eine Draufsicht auf eine Vorrichtung in eine Füllposition

Die dargestellte Vorrichtung besteht aus einem Grundelement 1 mit einem Rahmen 2 zur schachtelartigen Umschließung als Seitenwandungen. Parallel zum Grundelement 1 ist eine verschwenkbare Bodenplatte 3 angeordnet, die über eine Schwenkachse 4 am Endbereich des Grundelementes 1 gehalten ist und ein abgewinkeltes verbundenes Wandelement 6 aufweist, das den Rahmen 2 ergänzt.

Die schwenkbare angeordnete Bodenplatte 3 besitzt an seinem abgewinkelten Wandelement 6 eine Handhabe 7 als Lasche zur Verschwenkung der Bodenplatte 3, die über die Schwenkachse 4 hinausragt und in diesem Fall quasi eine Kröpfung nach außen besitzt. Zusätzlich ist an dem Grundelement 1 ein senkrecht angeordneter Haltegriff 8 zur Erfassung angeordnet, wobei die Handhabe 7 als Lasche zur Einhandbedienung im zugeordneten Abstand vorgesehen ist.

Durch diese Ausbildung ist es möglich, bei paralleler Zuordnung der Bodenplatte 3 zum Grundelement 1 eine Waffel oder eine andere Unterlage in den verschlossenen Innenraum 9 einzulegen. Anschließend werden beispielsweise Kugeln aus Frischeis in den Innenraum 9 auf die eingelegte Waffel aufgebracht und durch den Rahmen 2 seitlich begrenzt und festgehalten. Als Abdeckung wird zusätzlich eine Waffel oder eine andere Begrenzung aufgebracht.

Nach dieser Befüllung wird über die Handhabe 7 als Lasche eine Schwenkbewegung der Bodenplatte 3 um die Schwenkachse 4 durchgeführt, so daß ein gebildetes Sandwich aus dem Innenraum 9 herausschwenkbar ist und an der Außenseite der Bodenplatte 3 mit seinem Griffausschnitt 10 zum Verzehr entnehmbar ist.

## Patentansprüche

1. Vorrichtung für Frischeis zur Aufbereitung verkaufsfertiger, individuell zusammenstellbarer Portionen als Sandwicheis mit beidseitiger Außenbegrenzung durch Zuordnung von Waffeln oder dergleichen und zwischengelagerter Eismasse, wobei eine Form mit einem Grundelement (1) und einem Rahmen (2) als Außenbegrenzung in Viereckform für eine einzubringende Eismasse gebildet ist und eine verstellbare Bodenplatte (3) an der Form schwenkbar gelagert ist, die ein abgewinkeltes verbundenes Wandelement (6) als Teil des Rahmens (2) besitzt und die Form ein Halteelement (8) als Handgriff senkrecht zum Grundelement (1) aufweist, **dadurch gekennzeichnet, daß** die Bodenplatte (3) zur Aufnahme einer eingelegten Waffel oder dergleichen mit ihrem Wandelement (6) über eine am Wandelement (6) angeordnete Handhabe (7) durch eine über eine Schwenkachse (4) im Endbereich des Grundelementes (1) hinausreichende Lasche gebildet ist und die Bodenplatte (3) aus einer unteren Füllposition in eine Entnahmeposition mit einer aufgelegten Waffel oder dergleichen als Abdeckung gegenüber dem Rahmen (2) über die Schwenkachse (4) einstellbar ist sowie der Haltegriff (8) und die Handhabe (7) im Abstand zur gemeinsamen Erfassung als Ein-Hand-Bedienung angeordnet sind, wobei die verschwenkbare Bodenplatte (3) wellenförmig und mit Durchtrittsöffnungen ausgebildet ist.

2. Vorrichtung nach Anspruch 1, **dadurch gekennzeichnet, daß** die verschwenkbare Bodenplatte (3) mit dem Wandelement (6) an einem der Schwenkachse (4) abseitigem Ende einen Griffausschnitt (10) aufweist.

3. Vorrichtung nach Anspruch 1 oder 2, **dadurch gekennzeichnet, daß** der Haltegriff (8) über einen Bajonettverschluß mit dem Grundelement (1) lösbar verriegelbar angeordnet ist.

4. Vorrichtung nach einem der Ansprüche 1 bis 3, **dadurch gekennzeichnet, daß** der Rahmen (2) als Außenbegrenzung mindestens an einem der Schwenkachse (4) des Grundelementes (1) abseitigen Bereich eine Rundung aufweist.

5. Vorrichtung nach einem der Ansprüche 1 bis 4, **dadurch gekennzeichnet, daß** die Höhe des Rahmens (2) als Außenbegrenzung entsprechend der Dicke des Sandwiches bemessen ist.

## Claims

1. Device for freshly-made ice cream for preparing ready-to-sell portions, which can be made up individually, in the form of ice cream "sandwiches", with external delimitation on both sides by attaching wafers or the like and with a block of ice cream in temporary storage, wherein a mould with a base element (1) and a frame (2) is formed as the external delimitation in the shape of a quadrilateral for a block of ice cream which is to be introduced, and a displaceable base plate (3) is pivotably mounted on the mould and possesses an angled, connected wall element (6) as part of the frame (2), and the mould has a holding element (8) in the form of a hand-grip perpendicular to the base element (1), **characterised in that** the base plate (3) is formed, for the purpose of receiving an inserted wafer or the like with its wall element (6) via an operating handle (7) arranged on said wall element (6), by a flap which extends beyond a pivot pin (4) in the end region of the base element (1), and the base plate (3) can be adjusted in relation to the frame (2), via the pivot pin (4), from a lower, filling position into a removing position with a superimposed wafer or the like as a covering, and the hand-grip (8) and the operating handle (7) are arranged with an intervening space in order to be grasped jointly as a one-hand operation, the tiltable base plate (3) being constructed in a corrugated manner and with through-apertures.

2. Device according to Claim 1, **characterised in that** the tiltable base plate (3) with the wall element (6) has a cut-out (10) for gripping purposes on an end which is remote from the pivot pin (4).

3. Device according to Claim 1 or 2, **characterised in that** the hand-grip (8) is arranged so as to be capable of being interlocked, in a detachable manner, with the base element (1) via a bayonet catch.

4. Device according to one of Claims 1 to 3, **characterised in that** the frame (2) has, as an external delimitation, a rounded portion at least at a region which is remote from the pivot pin (4) of the base element (1).

5. Device according to one of Claims 1 to 4, **characterised in that** the height of the frame (2) is dimensioned, as an external delimitation, in a manner corresponding to the thickness of the "sandwich".

## Revendications

1. Dispositif pour de la glace fraîche, qui est destiné à la préparation d'une masse de glace en portions de composition individuelle, en tant que glaces sandwich, limitées des deux côtés par un agencement de gaufrettes ou de produit similaire, prêtes à la vente et entreposées, sachant qu'un moule, destiné à recevoir une masse de glace, est formé par un élément de base (1) et par un cadre (2), en tant que limitation extérieure de forme quadrangulaire, et qu'une plaque de fond (3) réglable, qui est dotée d'un élément de paroi (6) plié, relié, en tant que partie du cadre (2), est montée à pivotement dans le moule, et le moule étant doté d'un organe de préhension (8) en forme de poignée, qui s'étend perpendiculairement par rapport à l'élément de base (1), **caractérisé en ce que** la plaque de fond (3), destiné à recevoir une gaufrette ou un produit similaire, avec son élément de paroi (6), par l'intermédiaire d'un organe de maniement (7), agencé sur l'élément de paroi (6), est formée par une patte, qui s'étend au-delà d'un axe de pivotement (4), dans la zone finale de l'élément de base (1), et que la plaque de fond (3) peut être déplacée par rapport au cadre (2), par l'intermédiaire de l'axe de pivotement (4), d'une position de remplissage inferieure à une position de prélèvement, une gaufrette ou similaire étant disposée comme couverture, et que la poignée (8) et l'organe de maniement (7) sont agencés avec un intervalle, en tant que commande manuelle, sachant que la plaque de fond (3) pivotante est ondulée et est pourvue d'ouvertures de passage.

2. Dispositif selon la revendication 1, **caractérisé en ce que** la plaque de fond (3) pivotante, avec l'élément de paroi (6), est dotée d'un évidement de préhension (10) à une extrémité opposée à l'axe de pivotement (4).

3. Dispositif selon revendication 1 ou 2, **caractérisé en ce que** la poignée (8) peut être verrouillée, de manière amovible, avec l'élément de base (1), au moyen d'une fermeture à baïonnette.

4. Dispositif selon l'une des revendications 1 à 3, **caractérisé en ce que** le cadre (2), en tant que limitation extérieure, est doté d'un arrondi, au moins dans une région opposée à l'axe de pivotement (4) de l'élément de base (1).

5. Dispositif selon l'une des revendications 1 à 4, **caractérisé en ce que** la hauteur du cadre (2), en tant que limitation extérieure, est dimensionné en fonction de l'épaisseur du sandwich.
